# FASCICULE DE BREVET EUROPEEN

(11) **EP 4 214 695 B1**
(45) Date de publication et mention de la délivrance du brevet: **22.04.2026**
(21) Numéro de dépôt: 21785935.4
(22) Date de dépôt: 10.09.2021
(51) Int. Cl.: G09B 23/28

(54) **MODÈLE ANATOMIQUE DE MÂCHOIRE POUR LA SIMULATION D'UN GESTE D'ART DENTAIRE**
ANATOMISCHES KIEFERMODELL ZUR SIMULATION EINER ZAHNÄRZTLICHEN GESTE
ANATOMICAL MODEL OF A JAW FOR SIMULATING A DENTISTRY GESTURE

(30) Priorité: 17.09.2020 FR 2009403
(43) Date de publication de la demande: 26.07.2023
(73) Titulaire: Dentalhitec, 49280 Mazières-en-Mauges (FR)
(72) Inventeur: VILLETTE, Olivier, 49280 MAZIÈRES-EN-MAUGES (FR)
(74) Mandataire: Weinstein Services & Conseils
(86) Numéro de dépôt international: PCT/FR2021/051556
(87) Numéro de publication internationale: WO 2022/058674

(56) Documents cités:
- WO-A1-2015/019425
- FR-A1- 2 752 985
- US-A- 2 095 511
- US-A1- 2010 256 649

## Description

L'invention a trait au domaine des soins dentaires, et plus particulièrement à l'apprentissage de techniques un geste d'art dentaire comme par exemple l'anesthésie.

Dans de nombreuses professions, il est primordial de s'entrainer aux différentes techniques avant de les mettre en pratique. L'entrainement, permettant d'adopter des gestes sûrs et précis, est d'autant plus important dans les professions s'occupant des êtres vivants afin de ne pas les blesser ou de ne pas leur faire mal, comme par exemple pour les dentistes.

Un dentiste doit apprendre de nombreuses techniques ayant toutes leurs spécificités. De plus, les techniques évoluent en permanences et de nouvelles techniques sont créées forçant les dentistes à se former et s'entrainer constamment aux nouvelles techniques.

Pour se former, les dentistes peuvent s'exercer sur des patients, sous le contrôle d'un formateur. Cette méthode permet au dentiste en formation de ressentir parfaitement les sensations qu'il doit percevoir pour chacune des techniques apprises.

Cependant, le dentiste en formation ne contrôlant pas encore parfaitement ses gestes, cette méthode crée un risque de blessure ou de douleur pour le patient.

En effet, par exemple lors d'anesthésie intra-osseuse, pour injecter dans de bonnes conditions, il faut se rapprocher de l'extrémité des racines des dents, car si l'injection ne se fait pas assez profondément la zone est moins vascularisée ce qui peut créer des nécroses osseuses selon le produit injecté. Il ne faut également pas descendre en dessous des racines des dents au risque de provoquer des lésions. Il est également important de ne pas enfoncer l'aiguille jusqu'à la garde, pour pouvoir la retirer facilement si elle venait à casser.

La profondeur de pénétration de l'aiguille est donc un élément primordial pour une réalisation de l'anesthésie sans souci post-opératoire.

Pour se former, les dentistes peuvent également s'exercer en simulant les gestes sur des modèles anatomiques de mâchoire comprenant un modèle anatomique d'un maxillaire supérieur et un modèle anatomique d'un maxillaire inférieur. De tels modèles anatomiques ont pour avantage de regrouper en un seul modèle de nombreux cas pouvant être rencontrés chez les patients. Ces modèles anatomiques permettent également de ne faire courir aucun risque à un patient tant que le dentiste ne contrôle pas parfaitement ses gestes.

Le document US 2010/256649 A1 (CAPSAL JEAN [FR] ET AL) décrit un modèle de tête humaine comprenant une cavité buccale ayant des surfaces buccales et linguales élastiques dans lesquelles une aiguille d'injection pour anesthésiant peut être insérée. Le modèle comprend des contacts électriques 12 dissimulés sous les surfaces buccales et linguales aux niveaux des emplacements nerveux d'un patient afin de donner une indication audible et/ou visible que la position correcte de l'aiguille a été atteinte lors de son insertion au travers des surfaces buccales et linguales.

Cependant, les modèles anatomiques de mâchoire existant ne permettent pas au dentiste en formation de visualiser les bonnes angulations, les profondeurs de pénétration et encore moins de ressentir les sensations qu'il percevra lors de la mise en pratique des techniques apprises sur un patient.

L'objectif de l'invention est de proposer un modèle anatomique de maxillaire pour la simulation de techniques d'anesthésie permettant au dentiste de s'exercer seul tout en acquérant des gestes les plus précis possibles afin de traiter efficacement ses futurs patients sans risquer de les blesser ou de leur faire mal.

La présente invention concerne un modèle anatomique d'un maxillaire d'un être vivant comprenant une gencive représentant le maxillaire dudit être vivant tel que définie à la revendication indépendante 1 ainsi que d'un procédé de simulation de techniques d'anesthésie telle que défini à la revendication indépendante de méthode 9.

A cet effet, il est proposé, en premier lieu, un modèle anatomique d'un maxillaire d'un être vivant comprenant une gencive représentant le maxillaire dudit être vivant.

Ce modèle anatomique permet à un dentiste de s'exercer à des techniques d'art dentaire sans risque de blesser ou de faire mal à un patient.

Le modèle anatomique comprenant en outre au moins un guide pour outil intégré à la gencive pour permettre à un opérateur de simuler un geste d'art dentaire.

Le modèle anatomique permet, alors, au dentiste de s'exercer seul tout en acquérant des gestes les plus précis possibles.

Diverses caractéristiques supplémentaires peuvent être prévues, seules ou en combinaison :
- le guide traverse la gencive et comprend une glissière d'orientation d'une aiguille s'étendant dans la gencive et formant un trou sensiblement cylindrique au travers de la gencive afin de permettre à un dentiste de s'exercer à une technique d'anesthésie ;
- la glissière forme un angle compris entre les racines des dents et la corticale osseuse avec une direction suivant laquelle l'aiguille arrive entre les racines ou dans l'os spongieux si le septum n'est pas présent ;
- le guide comprend une paroi interne principale disposée dans la glissière en travers dudit trou de sorte qu'une aiguille insérée dans la glissière perfore la paroi interne principale afin de simuler le perçage de l'os cortical;
- une épaisseur de la paroi interne principale suivant la direction d'insertion de l'aiguille est comprise entre 0,1 et 2mm plus ou moins 20% ;
- le modèle anatomique comprend au moins une dent disposée sur la gencive ;
- le guide comprend au moins une paroi interne secondaire disposée dans la glissière en travers dudit trou, la paroi interne secondaire étant disposée en aval de la paroi interne principale dans le sens d'introduction de l'aiguille, de sorte qu'une aiguille insérée dans la glissière perfore d'abord la paroi interne principale puis la paroi interne secondaire afin de simuler le perçage de l'os cortical puis de l'os trabéculaire du maxillaire ;
- une épaisseur de la au moins une paroi interne secondaire suivant la direction d'insertion de l'aiguille est comprise entre 0,1 et 2mm plus ou moins 20% ;
- le guide comprend au moins deux parois internes secondaires écartées entre elles et de la paroi interne principale d'une distance comprise entre 0,3 et 2mm plus ou moins 20% ;
- le guide comprend une butée alignée avec le trou formé par la glissière et disposée en amont de la glissière dans le sens d'introduction de l'outil afin de d'apprendre au dentiste quelle est la bonne profondeur d'enfoncement de l'outil ;
- la butée étant disposée à une distance de la paroi interne principale comprise entre 2 et 7mm plus ou moins 20% ;
- le guide comprend une paroi de protection de l'extrémité libre de l'aiguille, la paroi de protection étant alignée avec le trou formé par la glissière et disposée en aval de la glissière dans le sens d'introduction de l'aiguille afin de protéger le dentiste lors de la manipulation du modèle anatomique après introduction de l'aiguille ;
- la paroi de protection comprend une fenêtre de visualisation de l'extrémité libre de l'aiguille permettant au praticien de voir l'emplacement de l'extrémité de l'aiguille ;
- le guide comprend une glissière d'orientation de l'aiguille, la glissière formant un angle de 10 degrés plus ou moins 20% avec une direction tangente au point de contact de l'aiguille sur la gencive.

Il est proposé, en deuxième lieu, un dispositif de simulation de techniques d'anesthésie, le dispositif comprenant un modèle anatomique d'un maxillaire supérieur d'un être vivant tel que précédemment décrit, un modèle anatomique d'un maxillaire inférieur d'un être vivant tel que précédemment décrit et un modèle d'une zone péribuccale de l'être vivant, chaque modèle anatomique comprenant un moyen de solidarisation au modèle de zone péribuccale, le modèle de zone péribuccale comprenant un moyen de fixation dans l'espace et une ouverture laissant apparaitre les deux modèles anatomiques.

Il est proposé, en troisième lieu, un procédé de simulation de techniques d'anesthésie, le procédé comprenant une insertion de l'aiguille d'une seringue dans un trou d'une gencive représentant un maxillaire d'un être vivant, le trou étant formé par une glissière d'un guide intégré à la gencive, une perforation d'une paroi interne principale du guide, la paroi interne principale étant disposée dans la glissière en travers dudit trou, et une visualisation de l'extrémité libre de la Seringue par une fenêtre de visualisation.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
[Fig. 1] - la figure 1 est une vue schématique selon une première perspective d'un mode de réalisation d'un modèle anatomique de mâchoire comprenant deux modèles anatomiques de maxillaires supérieur et inférieur comportant des guides pour la simulation de techniques d'anesthésie ;
[Fig. 2] - La figure 2 est une vue schématique selon une deuxième perspective du modèle anatomique de mâchoire représenté sur la figure 1 ; une seringue insérée dans un guide est représentée ;
[Fig. 3] - La figure 3 est une vue schématique selon une troisième perspective du modèle anatomique de mâchoire représenté sur les figures 1 et 2 ; une seringue insérée dans un guide est représentée ;
[Fig. 4A] - La figure 4A est une vue schématique selon une première perspective d'un premier mode de réalisation des guides ;
[Fig. 4B] - La figure 4B est une vue schématique selon une deuxième perspective du premier mode de réalisation des guides ;
[Fig. 4C] - La figure 4C est une vue schématique d'une coupe du premier mode de réalisation des guides suivant le plan IVc représenté sur la figure 4A ;
[Fig. 5A] - La figure 5A est une vue schématique selon une première perspective d'un deuxième mode de réalisation des guides ;
[Fig. 5B] - La figure 5B est une vue schématique d'une coupe du deuxième mode de réalisation des guides suivant le plan Vb représenté sur la figure 5A ;
[Fig. 6] - La figure 6 est une vue schématique en perspective d'un troisième mode de réalisation des guides ;
[Fig. 7] - La figure 7 est une vue schématique en perspective d'un dispositif de simulation comprenant un modèle anatomique de mâchoire et un modèle d'une zone péribuccale ;
[Fig. 8A] - La figure 8A est une vue schématique selon une première perspective d'une variante du premier mode de réalisation des guides, cette variante simulant une corticale d'un patient enfant alors que la variante illustrée sur les figures 4A à 4C simule une corticale d'un patient adulte ;
[Fig. 8B] - La figure 8B est une vue schématique d'une coupe de la variante du premier mode de réalisation des guides suivant le plan VIIIb représenté sur la figure 8A.

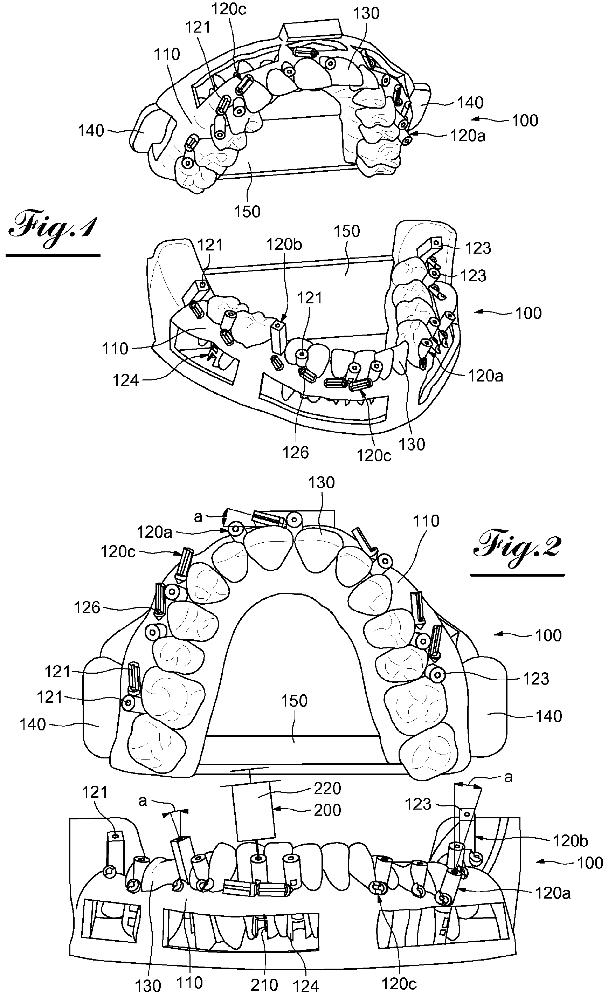

Les figures 1 à 3 représentent un modèle anatomique de mâchoire comprenant un modèle 100 anatomique de maxillaire supérieur et un modèle 100 anatomique de maxillaire inférieur d'un être vivant.

Selon le mode de réalisation représenté, chaque modèle 100 anatomique comprend une gencive 110 et des dents 130.

Les dents 130 ont de préférence des caractéristiques, comme par exemple l'écartement, l'angle ou la taille, recréant un grand nombre de cas qu'il est possible de trouver chez un tel être vivant.

Selon le mode de réalisation illustré, chaque modèle 100 anatomique comprend également des guides 120a, 120b, 120c, 120d pour la simulation de techniques d'anesthésie. Les guides 120a, 120b, 120c, 120d comprennent une glissière 121 permettant de faire glisser l'aiguille 210 d'une Seringue 200 qu'un dentiste en formation enfonce dans la gencive 110 le long de cette glissière 121 afin d'apprendre au dentiste en formation le geste adéquate.

Comme représenté sur la figure 2, les guides 120a, 120b, 120c, 120d forment par rapport à une partie du modèle 100 anatomique de préférence un angle a compris entre 10° et 90°. Cet angle a est différent selon chaque type d'anesthésie représenté par les guides 120a, 120b, 120c, 120d.

Cet angle a permet au dentiste en formation d'acquérir le geste correspondant spécifiquement à la technique d'anesthésie pour laquelle il se forme.

Les guides 120a, 120b, 120c, 120d comprennent également, de préférence, une butée 123 et/ou un pan 126 d'arrêt bloquant l'enfoncement de la Seringue 200 à une certaine profondeur dans la gencive 110. Cette profondeur d'enfoncement dépend du type d'anesthésie représenté par le guide 120a, 120b, 120c, 120d.

Cette profondeur d'enfoncement permet, une fois de plus, au dentiste en formation de préciser son geste en fonction de la technique d'anesthésie pour laquelle il se forme.

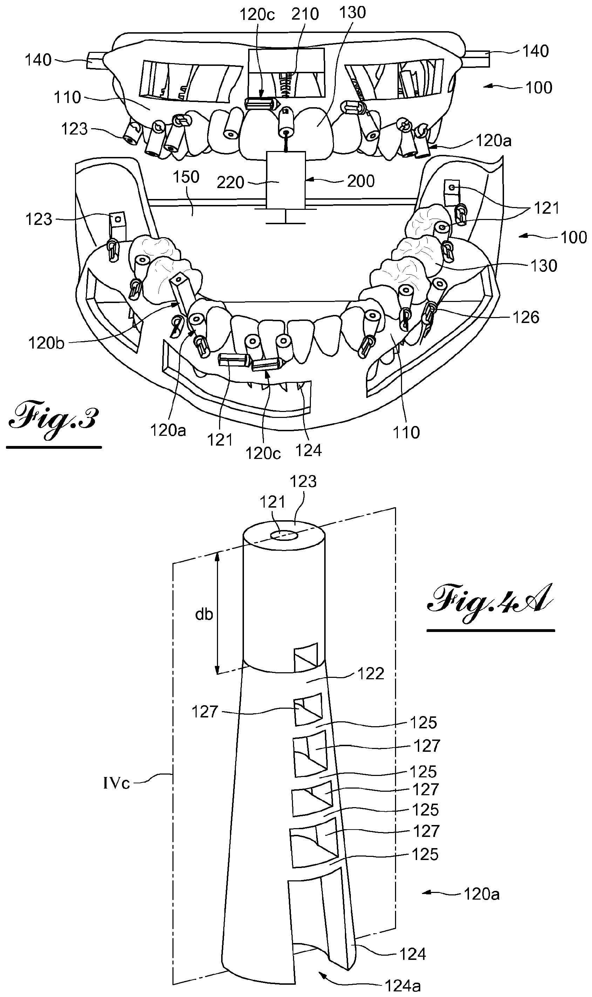

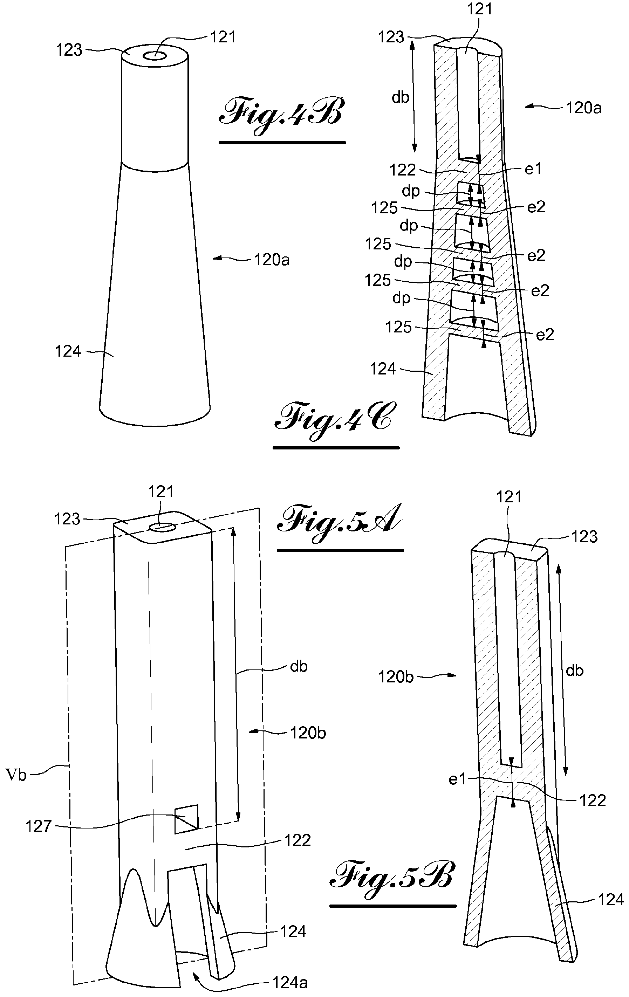

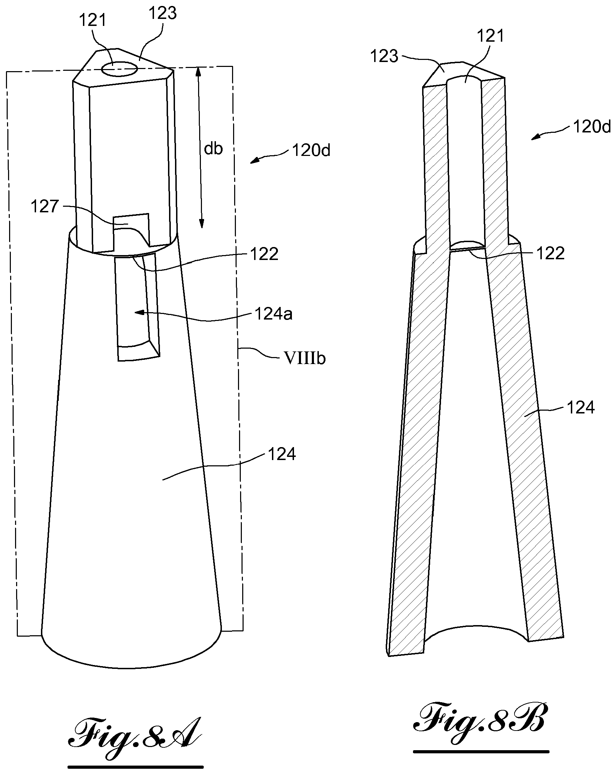

Les figures 4A à 4C et les figures 8A et 8B représentent un premier mode de réalisation du guide 120a, 120d. Ce mode de réalisation permet la simulation d'une anesthésie intra-osseuse dans une zone de la mâchoire comprenant un septum et donc un os trabéculaire relativement développé.

Le premier mode de réalisation du guide 120a, 120d est de préférence disposé dans une zone comprenant une dent 130 du modèle 100 anatomique du maxillaire.

Selon ce premier mode de réalisation, la glissière 121 forme un trou dans gencive 110. Le trou est par exemple cylindrique à base circulaire. Le diamètre du trou est supérieur à celui de l'aiguille 210.

Selon ce premier mode de réalisation, le tube passe par le sommet du septum et se dirige entre les racines des 2 dents.

Selon le mode de réalisation représenté sur les figures 4A à 4C, la glissière 121 est divisée en au moins trois sections par une paroi 122 interne principale et par au moins une paroi 125 interne secondaire disposées en travers de la glissière 121.

La paroi 122 interne principale et la ou les parois 125 internes secondaires sont disposées et configurées le long de la glissière 121 de sorte que l'aiguille 210 d'une Seringue 200 enfoncée dans le premier mode de réalisation du guide 120a le long de la glissière 121 traverse dans un premier temps la paroi 122 interne principale puis, dans un deuxième temps, la ou les parois 125 internes secondaires.

La paroi 122 interne principale représente ainsi l'os cortical du maxillaire. La ou les parois 125 internes secondaires représentent ainsi l'os trabéculaire du maxillaire.

La variante de ce premier mode de réalisation du guide 120d, illustrée sur les figures 8A et 8B, simule ce qui peut être ressenti sur une mâchoire d'un enfant et ne comprend de préférence pas de paroi 125 interne secondaire.

L'épaisseur e1 de la paroi 122 interne principale dans la version simulant une corticale d'un patient adulte de ce premier mode de réalisation, représenté sur les figures 4A à 4C, est de préférence de 2mm plus ou moins 20%.

L'épaisseur e1 de la paroi 122 interne principale dans la version simulant une corticale d'un patient enfant de ce premier mode de réalisation, représenté sur les figures 8A et 8B, est de préférence comprise entre 0,1mm et 1mm plus ou moins 20%.

L'épaisseur e2 de la ou des parois 125 internes secondaires dans ce premier mode de réalisation est de préférence comprise entre 0,1mm et 2mm plus ou moins 20%.

La distance dp séparant la paroi 122 interne principale et la ou des parois 125 internes secondaires entre dans ce premier mode de réalisation est de préférence comprise entre 0,5 et 2mm plus ou moins 20%.

Selon le mode de réalisation illustré sur les figures 4A à 4C et les figures 8A et 8B, le guide 120a, 120d comprend une butée 123 configurée pour bloquer le corps 220 de la Seringue 200.

La distance db séparant la butée 123 et la paroi 122 interne principale dans ce premier mode de réalisation est de préférence comprise entre 0,5mm et 2mm plus ou moins 20%.

Le premier mode de réalisation du guide 120a, 120d comprend de préférence, au-delà de la dernière paroi 122, 125 interne dans le sens d'insertion de l'aiguille 210 dans le guide 120a, une paroi 124 de protection.

Cette paroi 124 de protection est configurée pour protéger le dentiste en formation d'une piqure lors de la manipulation du modèle 100 anatomique du maxillaire après avoir enfoncé la Seringue 200 dans le guide 120a.

La paroi 124 de protection présente par exemple une forme évasée pour simuler la zone dans laquelle peut arriver l'extrémité libre de l'aiguille 210 après enfoncement dans le guide 120a, 120d.

La paroi 124 de protection comprend de préférence une fenêtre 124a de visualisation de l'extrémité libre de l'aiguille 210.

La fenêtre 124a de visualisation permet au dentiste en formation d'apprécier la profondeur d'enfoncement de l'aiguille 210 dans la gencive 110 pour une anesthésie intra-osseuse dans une zone de la mâchoire comprenant un septum.

Les figures 5A et 5B représentent un deuxième mode de réalisation du guide 120b. Ce mode de réalisation permet la simulation d'une anesthésie intra-osseuse dans une zone de la mâchoire ne comprenant pas de septum et donc un os trabéculaire peu développé.

Le deuxième mode de réalisation du guide 120b est de préférence disposé dans une zone édentée du modèle 100 anatomique du maxillaire.

Selon ce deuxième mode de réalisation, la glissière 121 forme un trou dans gencive 110.

Selon ce deuxième mode de réalisation, l'angle a formé entre le guide 120b et la corticale osseuse à cet emplacement est compris entre 70° et 110°.

Selon le mode de réalisation représenté sur les figures 5A et 5B, la glissière 121 est divisée en deux sections par une paroi 122 interne principale disposée en travers de la glissière 121.

La paroi 122 interne principale est disposée et configurée le long de la glissière 121 de sorte que l'aiguille 210 d'une Seringue 200 enfoncée dans le deuxième mode de réalisation du guide 120b le long de la glissière 121 traverse la paroi 122 interne principale.

La paroi 122 interne principale représente ainsi l'os cortical du maxillaire.

L'épaisseur e1 de la paroi 122 interne principale dans ce deuxième mode de réalisation est de préférence comprise entre 0,1mm et 2mm plus ou moins 20% (par exemple pour différencier une version simulant une corticale d'un patient enfant et d'un patient adulte).

Selon le mode de réalisation illustré sur les figures 5A et 5B, le guide 120b comprend une butée 123 configurée pour bloquer le corps 220 de la Seringue 200.

La distance db séparant la butée 123 et la paroi 122 interne principale dans ce deuxième mode de réalisation est de préférence comprise entre 0,5mm et 2mm plus ou moins 20%.

Le deuxième mode de réalisation du guide 120b comprend de préférence, au-delà de la paroi 122 interne principale dans le sens d'insertion de l'aiguille 210 dans le guide 120b, une paroi 124 de protection.

Cette paroi 124 de protection est configurée pour protéger le dentiste en formation d'une piqure lors de la manipulation du modèle 100 anatomique du maxillaire après avoir enfoncé la Seringue 200 dans le guide 120b.

La paroi 124 de protection présente par exemple une forme évasée pour simuler la zone dans laquelle peut arriver l'extrémité libre de l'aiguille 210 après enfoncement dans le guide 120b.

La paroi 124 de protection comprend de préférence une fenêtre 124a de visualisation de l'extrémité libre de l'aiguille 210.

La fenêtre 124a de visualisation permet au dentiste en formation d'apprécier la profondeur d'enfoncement de l'aiguille 210 dans la gencive 110 pour une anesthésie intra-osseuse dans une zone de la mâchoire ne comprenant pas de septum.

Le premier et le deuxième mode de réalisation du guide 120a, 120b, 120d présentent de préférence une forme externe différente permettant de les différencier lorsque ces guides 120a, 120b, 120d sont disposés sur un même modèle 100 anatomique du maxillaire.

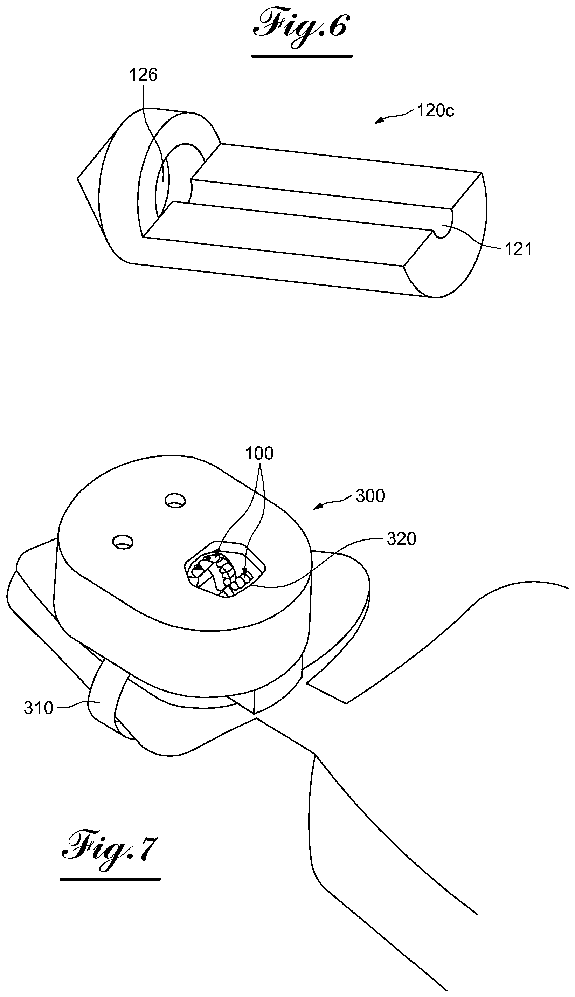

La figure 6 représente un troisième mode de réalisation du guide 120c. Ce mode de réalisation permet la simulation d'une anesthésie de la muqueuse d'un patient.

Selon ce troisième mode de réalisation, la glissière 121 est en dehors de la gencive 110.

La glissière 121 est de préférence ouverte laissant au dentiste en formation la possibilité de voir la totalité de l'aiguille 210.

Selon ce troisième mode de réalisation, l'angle a formé entre le guide 120c et une tangente au point de contact de l'aiguille 210 avec la gencive 110 est de 10 degrés plus ou moins 10 pourcents.

Selon le mode de réalisation illustré sur la figure 6, le guide 120c comprend un pan 126 d'arrêt configuré pour bloquer l'enfoncement de l'extrémité libre de l'aiguille 210.

Selon un mode de réalisation, les guides 120a, 120b, 120c, 120d sont fabriqués en résine.

Selon un mode de réalisation, les guides 120a, 120b, 120c, 120d sont fabriqués par impression 3D.

Dans le premier et dans le deuxième mode de réalisation, le guide 120a, 120b, 120d comprend, de préférence, au-dessus de chaque paroi 122, 125 interne dans le sens d'enfoncement de l'aiguille 210 dans le guide 120a, 120b, 120d, un jour 127 permettant l'évacuation du matériau lors de la fabrication des guides 120a, 120b, 120d.

Les épaisseurs e1, e2 des parois 122, 125 internes principale et secondaires diffèrent, de préférence, en fonction de l'emplacement du guide 120a, 120b, 120d dans la mâchoire. Ces épaisseurs e1, e2 sont, par exemple, plus importantes lorsque le guide 120a, 120b, 120d est disposé au niveau des molaires que lorsque le guide 120a, 120b, 120d est disposé au niveau des incisives.

Toutes les données numériques ne sont données qu'à titre d'exemple. Ces données numériques permettent de représenter au mieux pour le dentiste en formation le ressenti qu'il devrait avoir sur un patient humain.

La figure 7 représente un dispositif de simulation d'au moins une technique d'anesthésie.

Le dispositif comprend un modèle 300 de zone péribuccale et au moins un modèle 100 anatomique de maxillaire comportant au moins un guide 120a, 120b, 120c, 120d.

Le modèle 300 de zone péribuccale comprend une ouverture 320 laissant apparaitre le au moins un modèle 100 anatomique du maxillaire.

Le modèle 100 anatomique comprend, selon un mode de réalisation, au moins un moyen 140 de solidarisation au modèle 300 de zone péribuccale. Ainsi, les modèles 100 anatomiques peuvent être changés une fois les anesthésies réalisées.

Le modèle 100 anatomique comprend également, selon un mode de réalisation, au moins un moyen 150 d'association à un autre modèle 100 anatomique. Cela permet de donner à la mâchoire un angle d'ouverture adéquate et de renforcer la solidité des modèles 100 anatomiques de maxillaire.

Le modèle 300 de zone péribuccale comprend également, de préférence, un moyen 310 de fixation dans l'espace. Le moyen 310 de fixation est, par exemple, une bande auto-agrippante ou élastique pour la fixation sur la têtière d'un fauteuil de dentiste. Ainsi, les conditions réelles d'un cabinet dentaire peuvent être recréées.

Le modèle 300 de zone péribuccale est avantageusement fabriqué dans un matériau suffisamment mou et élastique pour représenter les joues d'un patient.

Selon un mode de réalisation, le modèle 300 de zone péribuccale est fabriqué en mousse de polyuréthane.

## Revendications

1. Modèle (100) anatomique d'un maxillaire d'un être vivant comprenant une gencive (110) représentant le maxillaire dudit être vivant, le modèle (100) anatomique étant **caractérisé en ce qu'**il comprend au moins un guide (120a ; 120b ; 120c ; 120d) pour outil intégré à la gencive (110) pour permettre à un opérateur de simuler un geste d'art dentaire, et **en ce que** le guide (120a ; 120b ; 120d) traverse la gencive (110) et comprend une glissière (121) d'orientation d'une aiguille (210) s'étendant dans la gencive (110) et formant un trou sensiblement cylindrique au travers de la gencive (110).

2. Modèle (100) anatomique selon la revendication précédente, **caractérisé en ce que** le guide (120a ; 120b ; 120d) comprend une paroi (122) interne principale disposée dans la glissière (121) en travers dudit trou de sorte qu'une aiguille (210) insérée dans la glissière (121) perfore la paroi (122) interne principale.

3. Modèle (100) anatomique selon l'une quelconque des revendications 1 ou 2, **caractérisé en ce que** le guide comprend une paroi (124) de protection de l'extrémité libre de l'aiguille (210), la paroi (124) de protection étant alignée avec le trou formé par la glissière (121) et disposée en aval de la glissière (121) dans le sens d'introduction de l'aiguille (210).

4. Modèle (100) anatomique selon l'une quelconque des revendications précédentes, **caractérisé en ce qu'**il comprend au moins une dent (130) disposée sur la gencive (110).

5. Modèle (100) anatomique selon la revendication précédente lorsqu'elle dépend de la revendication 2, **caractérisé en ce que** le guide (120a) comprend au moins une paroi (125) interne secondaire disposée dans la glissière (121) en travers dudit trou, la paroi (125) interne secondaire étant disposée en aval de la paroi (122) interne principale dans le sens d'introduction de l'aiguille (210), de sorte qu'une aiguille insérée dans la glissière (121) perfore d'abord la paroi (122) interne principale puis la paroi (125) interne secondaire.

6. Modèle (100) anatomique selon l'une quelconque des revendications précédentes, **caractérisé en ce que** le guide (120a ; 120b ; 120d) comprend une butée (123) alignée avec le trou formé par la glissière (121) et disposée en amont de la glissière (121) dans le sens d'introduction de l'outil (210).

7. Modèle (100) anatomique selon la revendication précédente, **caractérisé en ce que** la paroi (124) de protection comprend une fenêtre (124a) de visualisation de l'extrémité libre de l'aiguille (210).

8. Dispositif de simulation de techniques d'anesthésie, le dispositif comprenant un modèle (100) anatomique d'un maxillaire supérieur d'un être vivant selon l'une quelconque des revendications précédentes, un modèle (100) anatomique d'un maxillaire inférieur d'un être vivant selon l'une quelconque des revendications précédentes et un modèle (300) d'une zone péribuccale de l'être vivant, chaque modèle (100) anatomique comprenant un moyen (140) de solidarisation au modèle (300) de zone péribuccale, le modèle (300) de zone péribuccale comprenant un moyen (310) de fixation dans l'espace et une ouverture (320) laissant apparaitre les deux modèles (100) anatomiques.

9. Procédé de simulation de techniques d'anesthésie, le procédé comprenant une insertion de l'aiguille (210) d'une seringue (200) dans un trou d'une gencive (110) représentant un maxillaire d'un être vivant, le trou étant formé par une glissière d'orientation (121) d'un guide (120a ; 120b ; 120d) intégré à la gencive (110), une perforation d'une paroi (122) interne principale du guide (120a ; 120b ; 120d), la paroi (122) interne principale étant disposée dans la glissière (121) en travers dudit trou, et une visualisation de l'extrémité libre de la seringue (200) par une fenêtre (124a) de visualisation.

## Patentansprüche

1. Anatomisches Modell (100) eines Oberkiefers eines Lebewesens, umfassend ein Zahnfleisch (110), das den Kiefer des Lebewesens darstellt, wobei das anatomische Modell (100) **dadurch gekennzeichnet ist, dass** es mindestens eine Führung (120a; 120b; 120c; 120d) für ein Werkzeug umfasst, die in das Zahnfleisch (110) integriert ist, um es einem Bediener zu ermöglichen, eine zahnärztliche Handlung zu simulieren, und dass die Führung (120a; 120b; 120d) das Zahnfleisch (110) durchquert und eine Ausrichtungsschiene (121) einer Nadel (210) umfasst, die sich in das Zahnfleisch (110) erstreckt und ein im Wesentlichen zylindrisches Loch durch das Zahnfleisch (110) bildet.

2. Anatomisches Modell (100) nach dem vorherigen Anspruch, **dadurch gekennzeichnet, dass** die Führung (120a; 120b; 120d) eine innere Hauptwand (122) umfasst, die in der Schiene (121) quer zu dem Loch angeordnet ist, sodass eine Nadel (210), die in die Schiene (121) eingeführt wird, die innere Hauptwand (122) perforiert.

3. Anatomisches Modell (100) nach einem der Ansprüche 1 oder 2, **dadurch gekennzeichnet, dass** die Führung eine Schutzwand (124) des freien Endes der Nadel (210) umfasst, die Schutzwand (124) mit dem von der Schiene (121) gebildeten Loch ausgerichtet ist und in der Einführrichtung der Nadel (210) stromabwärts von der Schiene (121) angeordnet ist.

4. Anatomisches Modell (100) nach einem der vorherigen Ansprüche, **dadurch gekennzeichnet, dass** es mindestens einen Zahn (130) umfasst, der auf dem Zahnfleisch (110) angeordnet ist.

5. Anatomisches Modell (100) nach dem vorherigen Anspruch, wenn abhängig von Anspruch 2, **dadurch gekennzeichnet, dass** die Führung (120a) mindestens eine sekundäre Innenwand (125) umfasst, die über das Loch in der Schiene (121) angeordnet ist, wobei die sekundäre Innenwand (125) in der Einführrichtung der Nadel (210) stromabwärts von der primären inneren Wand (122) angeordnet ist, sodass eine in die Schiene (121) eingeführte Nadel zuerst die primäre Innenwand (122) und dann die sekundäre innere Wand (125) perforiert.

6. Anatomisches Modell (100) nach einem der vorherigen Ansprüche, **dadurch gekennzeichnet, dass** die Führung (120a; 120b; 120d) einen Anschlag (123) umfasst, der mit dem von der Schiene (121) gebildeten Loch ausgerichtet ist und in der Einführrichtung des Werkzeugs (210) stromaufwärts von der Schiene (121) angeordnet ist.

7. Anatomisches Modell (100) nach dem vorherigen Anspruch, **dadurch gekennzeichnet, dass** die Schutzwand (124) ein Fenster (124a) zum Betrachten des freien Endes der Nadel (210) umfasst.

8. Vorrichtung zur Simulation von Anästhesietechniken, die Vorrichtung umfassend ein anatomisches Modell (100) eines Oberkiefers eines Lebewesens nach einem der vorherigen Ansprüche, ein anatomisches Modell (100) eines Unterkiefers eines Lebewesens nach einem der vorherigen Ansprüche und ein Modell (300) eines perioralen Bereichs des Lebewesens, jedes anatomische Modell (100) umfassend eine Einrichtung (140) zur festen Verbindung mit dem Modell (300) des perioralen Bereichs, das Modell (300) des perioralen Bereichs umfassend eine Einrichtung (310) zur Befestigung im Raum und eine Öffnung (320), die die zwei anatomischen Modelle (100) freilässt.

9. Verfahren zur Simulation von Anästhesietechniken, das Verfahren umfassend ein Einführen der Nadel (210) einer Spritze (200) in ein Loch eines Zahnfleischs (110), das einen Kiefer eines Lebewesens darstellt, wobei das Loch durch eine Ausrichtungsschiene (121) einer Führung (120a; 120b; 120d), die in das Zahnfleisch (110) integriert ist, eine Perforation einer inneren Hauptwand (122) der Führung (120a; 120b; 120d) gebildet ist, wobei die innere Hauptwand (122) in der Schiene (121) quer zu dem Loch angeordnet ist, und eine Sichtbarmachung des freien Endes der Spritze (200) durch ein Sichtfenster (124a).

## Claims

1. An anatomical model (100) of a maxilla of a living being comprising a gingiva (110) representing the maxilla of said living being, the anatomical model (100) being **characterized in that** it comprises at least one tool guide (120a;120b;120c;120d), integrated into the gingiva (110) to allow an operator to simulate a dentistry gesture, and **in that** the guide (120a;120b;120d) passes through the gingiva (110) and comprises a slideway (121) for orienting a needle (210) extending in the gingiva (110) and forming a substantially cylindrical hole through the gingiva (110).

2. The anatomical model (100) according to the preceding claim, **characterized in that** the guide (120a;120b;120d) comprises a main internal wall (122) arranged in the slideway (121) across said hole, so that a needle (210) inserted into the slideway (121) pierces the main internal wall (122).

3. The anatomical model (100) according to any one of claims 1 or 2, **characterized in that** the guide comprises a protective wall (124) for the free end of the needle (210), the protective wall (124) being aligned with the hole formed by the slideway (121) and arranged downstream of the slideway (121) in the needle (210) insertion direction.

4. The anatomical model (100) according to any one of the preceding claims, **characterized in that** it comprises at least one tooth (130) arranged on the gingiva (110).

5. The anatomical model (100) according to the preceding claim when dependent on claim 2, **characterized in that** the guide (120a) comprises at least one secondary internal wall (125) arranged in the slideway (121) across said hole, the secondary internal wall (125) being arranged downstream of the main internal wall (122) in the needle (210) insertion direction, so that a needle inserted into the slideway (121) first pierces the main internal wall (122) and then the secondary internal wall (125).

6. The anatomical model (100) according to any one of the preceding claims, **characterized in that** the guide (120a;120b;120d) comprises a stop (123) aligned with the hole formed by the slideway (121) and arranged upstream of the slideway (121) in the tool (210) insertion direction.

7. The anatomical model (100) according to the preceding claim, **characterized in that** the protective wall (124) comprises a window (124a) for viewing the free end of the needle (210).

8. A device for simulating anaesthesia techniques, the device comprising an anatomical model (100) of an upper maxilla of a living being according to any one of the preceding claims, an anatomical model (100) of a lower maxilla of a living being according to any one of the preceding claims, and a model (300) of a perioral area of the living being, each anatomical model (100) comprising a means (140) for securing to the perioral area model (300), the perioral area model (300) comprising a means (310) for fixing in space and an opening (320) revealing the two anatomical models (100).

9. A method for simulating anaesthesia techniques, the method comprising inserting the needle (210) of a syringe (200) into a hole of a gingiva (110) representing a maxilla of a living being, the hole being formed by an orientation slideway (121) of a guide (120a;120b;120d) integrated into the gingiva (110), piercing a main internal wall (122) of the guide (120a;120b;120d), the main internal wall (122) being arranged in the slideway (121) across said hole, and viewing the free end of the syringe (200) through a viewing window (124a).
